# EUROPEAN PATENT APPLICATION

(11) **EP 1 401 177 A1**
(43) Date of publication of application: **24.03.2004**
(21) Application number: 02728066.8
(22) Date of filing: 16.05.2002
(51) Int. Cl.: H04M 1/00, H04N 5/232

(54) **CAMERA−EQUIPPED CELLULAR TELEPHONE**

(30) Priority: 29.06.2001 JP 2001198713
(71) Applicant: MATSUSHITA ELECTRIC INDUSTRIAL CO., LTD., Kadoma-shi, Osaka 571-0050 (JP)
(72) Inventor: MONDEN, Takao, Yokohama-shi, Kanagawa 246-0012 (JP); ISHIGAKI, Junji, Hachioji-shi, Tokyo 192-0032 (JP); NAGURA, Makoto, Machida-shi, Tokyo 194-0043 (JP); NAKANISHI, Kiyoshi, Kawasaki-shi, Kanagawa 211-0053 (JP)
(74) Representative: Grünecker, Kinkeldey, Stockmair & Schwanhäusser Anwaltssozietät
(86) International application number: PCT/JP2002/004746
(87) International publication number: WO 2003/003698

(57) **Abstract**

The invention aims at providing a cell phone equipped with a camera arranged so that the camera shutter may be automatically operated through control from another telephone set or cell phone. In order to attain the object, the invention provides a cell phone equipped with a camera arranged so that the camera shutter is automatically operated based on an incoming call signal corresponding to an incoming call or based on a specific signal received after a response to the incoming call signal while the cell phone is in the camera mode.

## Description

### <Technical Field>

The present invention relates to a cell phone equipped with a camera arranged so that the camera shutter may be automatically operated through control from another telephone set.

### <Background ART>

In recent years, cell phones have incorporated a variety of functions and the size and weight of a cell phone have been dramatically reduced. In particular, recent cell phones are capable of communicating data and images as well as voice, thus remarkably expanding their applications.

Under such circumstances, a cell phone equipped with a camera is already known.

However, on such cell phones, the shutter of a camera provided on a cell phone can be operated only on the cell phone, not by other apparatus.

For these cell phones, to take a picture of all participants such as friends of yours in a travel, you must ask someone else at the photography shooting site to take the picture.

Meanwhile, concerning a camera itself, an automatic shutter using a timer and a remote controller using an infrared ray are known. These approaches each requires a special shutter mechanism to be added. For the former, the user has to rush to the shooting site after operating the shutter release. This may result in an error in photography shooting in case the user gets late. For the latter, a remote controller must be carried along with a camera, which is extremely cumbersome.

The invention solves such related art problems and aims at providing an excellent cell phone equipped with a camera arranged so that the camera shutter may be automatically operated through control from another telephone set or cell phone.

### <Disclosure of the Invention>

In order to attain the object, the invention provides a cell phone equipped with a camera arranged so that the camera shutter is automatically operated based on an incoming call signal corresponding to an incoming call or based on a specific signal received after a response to the incoming call signal while the cell phone is in the camera mode.

The term "all termination" includes incoming call for receiving a mail, a message and other information as well as incoming call to initiate a voice call.

Thus, according to the invention, it is possible, from an ordinary telephone set or one of a plurality of cell phones, if any, to operate the shutter of a camera provided on another cell phone.

### <Brief Description of the Drawings>

Fig. 1 is a general block diagram of a cell phone equipped with a camera according to an embodiment of this invention;
Fig. 2 is a flowchart of the main operation of a cell phone equipped with a camera according to the embodiment;
Fig. 3 is a flowchart of the main operation of a cell phone equipped with a camera according to a second embodiment;
Fig. 4 is a flowchart of the main operation of a cell phone equipped with a camera according to a third embodiment;
Fig. 5 is a flowchart of the main operation of a cell phone equipped with a camera according to a fourth embodiment;
Fig. 6 is a flowchart of the main operation of a cell phone equipped with a camera according to a fifth embodiment.

In the figures, a numeral 1 represents operation means, 2 control means, 3 transmission/reception means, 4 storage means, 5 display means, 6 a camera, 7 an earpiece, 8 a mouthpiece, 9 a speech circuit, and 10 an antenna.

### <Best Mode for Carrying Out the Invention>

Embodiments of the invention will be described referring to drawings.

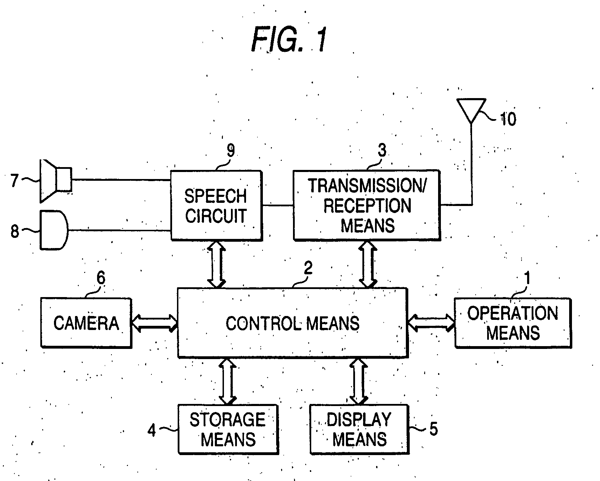

Fig. 1 is a general block diagram showing a cell phone equipped with a camera according to an embodiment of the invention.

In Fig. 1, operation means 1 is a keyboard equipped with a ten-key pad for dialing and a plurality of keys used to input characters, symbols and functions. A signal operated and input from the operation means 1 is applied to control means 2. The control means 2 is arranged to be controlled by a signal received by the transmission/reception means 3 as well as information input from the operation means 1, and control the storage means 4, the display means 5, the camera 6, and the transmission/reception means 3 based on the control.

Numerals 7, 8 are an earpiece and a mouthpiece respectively and are connected to the transmission/reception means 3 via the speech circuit 9. A numeral 10 is an antenna connected to the transmission/reception means 3.

In Fig. 1, an incoming call is received by the transmission/reception means 3 and its termination is recognized by the control means 2. When incoming call is recognized, an incoming call tone is generated by incoming call tone generating means (not shown) to notify the user of an incoming call. In this case, a vibrator may be used instead of the incoming call tone generating means to notify the user an incoming call through its vibration. A configuration is desirable where the incoming call tone is automatically selected in order to avoid vibration to prevent camera shake in the camera mode.

When incoming call is noticed and the operation means 1 is operated in response to the incoming call, the control means 2 instructs the transmission/reception means 3 to seize the circuit. The transmission/reception means 3 seizes the circuit to allow conversation with the caller via the mouthpiece 8 and the earpiece 7.

In the case of call origination, the user dials the directory number of the distant party and presses a key for call origination on the operation means 1. The transmission/reception means 3 originates a call by radio to the called number via the antenna 10. When the called party answers the call, it is possible to talk with the called party via the mouthpiece 8 and the earpiece 7.

The foregoing procedure i's a well known operation on a related art cell phone. In this embodiment, storage means is also provided to store the names and directory numbers of distant parties.

In call origination, the user has only to enter at least the first several characters of the target destination on the operation means 1. The control means 2 extracts the directory number of the destination which matched the input from the storage means 4, displays the number on the display means 5. Operating a key for call origination transmits by radio a dial signal corresponding to the target directory number displayed on the display mean 5 via the antenna 10 under the control of the control means 2.

In call termination, in case an originating number transmitted together with a incoming call signal is received, it is determined whether the originating number matches the directory number of the caller stored in the storage means 4 under the control of the control means 2. In case a match is obtained, the name or directory number of the caller, or both, are displayed on the display means 5. Otherwise, that fact that matching is not obtained is displayed on the display means 5.

In this embodiment, the camera 6 is provided. By operating a predetermined key on the operation means 1, it is possible to shoot an image before the camera 6, display the shot image on the display means 5, and store the image into the storage means 4, under the control of the control means 2.

When a predetermined key on the operation means 1 is operated as a general operation, a cell phone equipped with a camera according to the embodiment enters the camera mode. The camera mode refers to a mode where shooting of an image before the camera 6 is allowed by using the camera 6. The camera mode is provided to discriminate itself from the general telephone mode where power supply to the camera 6 and application of a control signal are halted.

In the camera mode, when a predetermined key on the operation means 1, that is, a key for shutter operation is operated, the shutter of the camera 6 is operated at that moment to shoot an image before the camera 6. The shot image is stored into the storage means 4. The image can be arbitrarily read by the operation of the predetermined key on the operation means 1 from the storage means 4 and displayed on the display means 5.

Next, remote operation of the shutter of the camera 6 will be described.

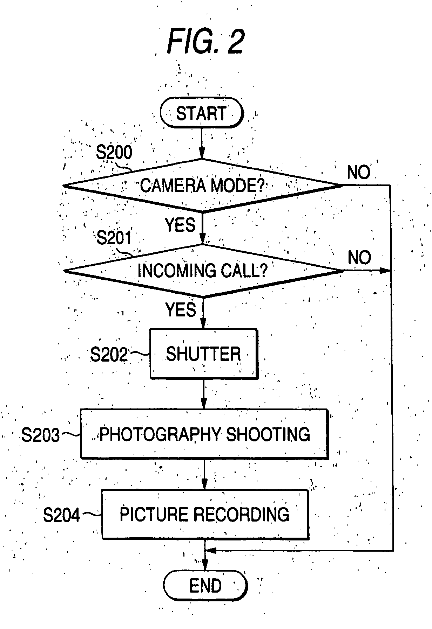

In the first embodiment, as shown in Fig. 2, when incoming call takes place (S201: YES) in the camera mode (S200: YES), the incoming call is detected by the control means 2, and the shutter of the camera 6 is automatically operated (S202) and the image before the camera 6 is shot (S203) under the control of the control means 2. The shot image is stored into the storage means 4 under the control of the control means 2 (S204). Thus, It is possible to arbitrarily read shot images and display the images on the display means 5 by operating the predetermined key on the operation means 1.

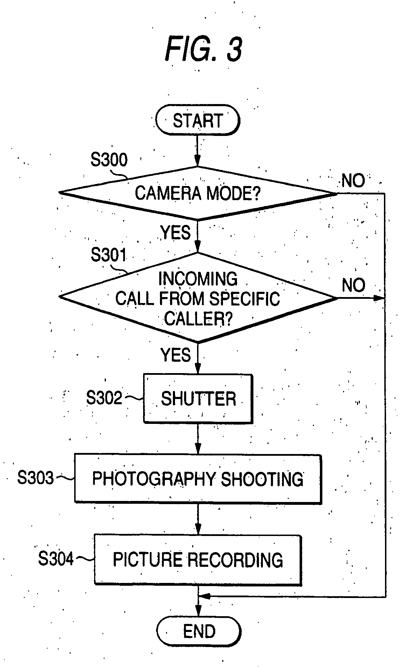

In the second embodiment, as shown in Fig. 3, in the camera mode (S300: YES), it is determined whether a number for identifying the caller, for example an originating number transmitted together with the incoming call matches the directory number of the caller previously stored in the storage means 4. In accordance with the determination result, the shutter of the camera 6 is automatically operated (S302) only in case a matching is obtained (S301: YES). The subsequent operation is the same as that in the first embodiment so that the detailed description is omitted.

In this case, an incoming call only from a specific caller is addressed. This prevents the shutter of the camera 6 from being inadvertently operated by incoming call from others as much as possible.

In particular, such a cell phone equipped with a camera is desirably arranged so that it will address incoming call from only limited callers. Thus, the data on the specific callers may be stored into the storage means 4, separately from the names and directory numbers of distant parties used for ordinary call origination and incoming call display.

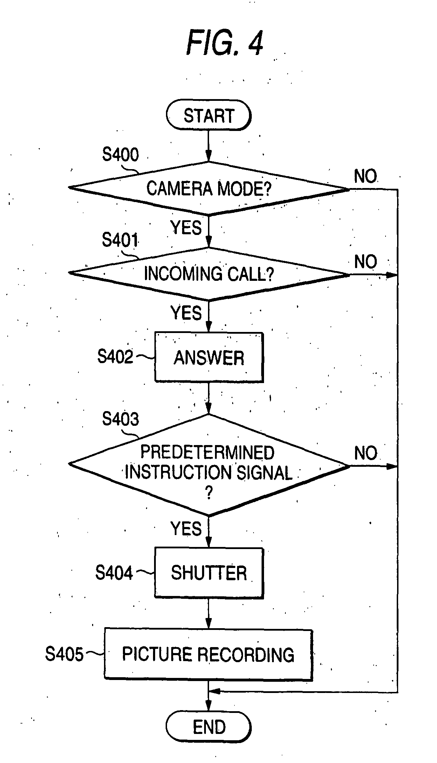

In the third embodiment, as shown in Fig. 4, answering means to automatically answer an incoming call (S401: YES) in the camera mode (S400: YES) is provided. After the line is seized and the call is answered by the answering means (S402), a predetermined specification signal for shutter operation is transmitted from the distant party. Only in case the signal is received (S403: YES), the shutter of the camera is operated in accordance with the specification signal (S404). The subsequent operation is the same as that in the first embodiment so that the detailed description is omitted.

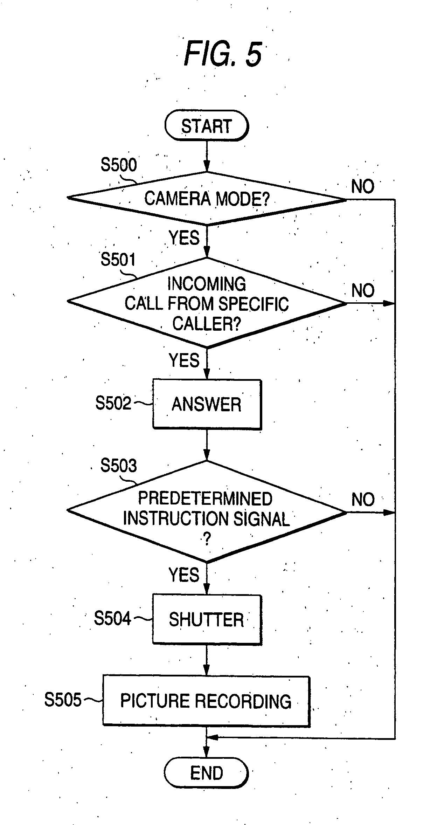

In the fourth embodiment, as shown in Fig. 5, in the camera mode (S500: YES), it is determined whether a number for identifying the caller, for example an originating number transmitted together with the incoming call matches the directory number of the caller previously stored in the storage means 4. Answering means to automatically answer an incoming call which matched the comparison in accordance with the determination result (S501: YES) is provided. After the line is, seized and the call is answered by the answering means (S502), a predetermined specification signal for shutter operation is transmitted from the distant party. Only in case the signal is received (S503: YES), the shutter of the camera is operated in accordance with the specification signal (S504). The subsequent operation is the same as that in the first embodiment so that the detailed description is omitted.

In the third and fourth embodiments, the specification signal may be a predetermined signal defined by a manufacturer in advance or may be arbitrarily defined by the user on the operation means 1. In this practice, respective users may set the specification signal and notice the signal to the partner, and operation of the shutter will address incoming call from the partner correctly, which minimizes unnecessary operations.

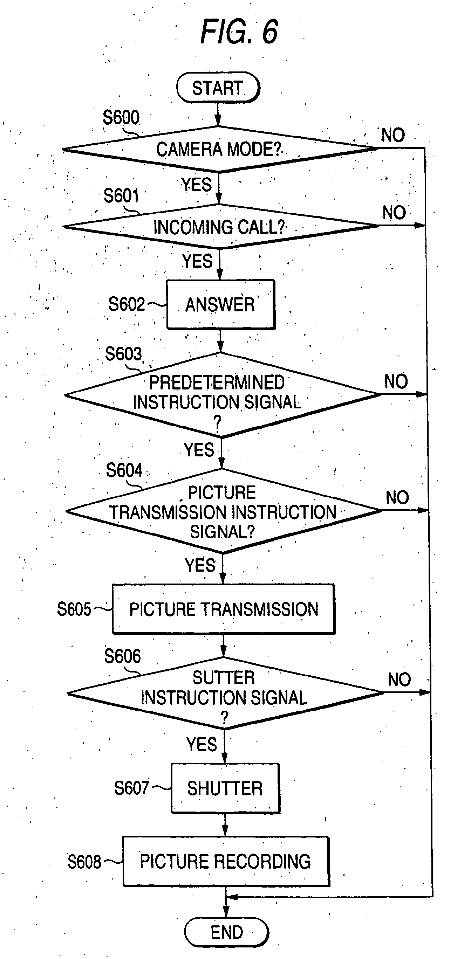

In the fifth embodiment, as shown in Fig. 6, in the camera mode (S600: YES), in case an incoming call (S601: YES) is answered (S602) then, after a predetermined signal is received and incoming call from a specific party is verified (S603: YES), in case a picture signal transmission instruction signal is received (S604: YES), a picture for monitor shot by a camera is transmitted to the telephone set of the caller via the transmission/reception means 3 and the antenna 10 (S605) under the control of the control means 2. The shutter of the camera 6 is operated (S607) when an instruction signal for shutter operation is further transmitted from the caller and received (S606: YES). The subsequent operation is the same as that in the first embodiment so that the detailed description is omitted. In this configuration, the caller can operate the shutter of the camera while monitoring the picture. This assures photography shooting at a better moment.

The picture signal of a picture shot with the camera 6 and stored into the'storage means 4 may be arbitrarily read by the operation on the operation means 1 and displayed on the display means 5. In case that the picture signal are transmitted to the telephone set of the caller, the distant party may be called through operation on the operation means 1 and the picture signal read from the storage means 4 may be arbitrarily transmitted using the transmission/reception means 3 under the control of the control means 2. In this case, transmission may be via the Internet or E-mail as well as ordinary telephone lines.

Another configuration of the embodiment is possible where, with an incoming call answered and line seized, a picture signal is read from the caller, an instruction signal to instruct transmission is transmitted, and when the signal is received, the picture stored in the storage means 4 is automatically read based on the instruction signal and transmitted to the telephone set of the caller via the transmission/reception means 3.

With this configuration, the state of the user's home is easily monitored using a cell phone at the user's home from another cell phone the user carries. For this purpose, a cell phone equipped with a camera according to the embodiment requires means for transmitting the instruction signal.

While the invention has been described in detail referring to specific embodiment, those skilled in the art will recognize that various changes and modifications can be made in it without departing from the spirit and scope thereof.

This patent application is based on the Japanese Patent Application filed June 29, 2001 (the Japanese Patent Application No. 2001-198713), the disclosure of which is incorporated herein by reference.

### <Industrial Applicability>

As mentioned hereinabove, according to the invention, the shutter of a camera attached to a cell phone is automatically operated based on incoming call to the cell phone. Even when you travel with friends of yours or your family, provided that at least two members have respective cell phones, one cell phone is placed in the camera mode and the shutter of the camera mounted on the cell phone is remotely operated from the other cell phone. This eliminates the trouble of asking someone else at the photography shooting site to press the shutter button.

According to the invention, the shutter of the camera is operated when an incoming call arrives through telephone lines. Thus a remote control using an infrared ray is not required and the resulting configuration is very simple.

## Claims

1. A cell phone equipped with a camera wherein the cell phone comprises a camera whose shutter is automatically operated based on an incoming call signal corresponding to an incoming call to the cell phone while the cell phone is set to the camera mode.

2. A cell phone equipped with a camera according to claim 1, wherein the cell phone comprises comparing means for comparing a signal for identifying the caller received together with an incoming call signal matches a pre-registered specific signal and means for automatically operating the shutter of the camera when the comparing means has detected that the two signals match each other.

3. A cell phone equipped with a camera wherein the cell phone comprises means for automatically answering an incoming call and a camera whose shutter is automatically operated when a specific signal from the caller is received with the incoming call answered by the answering means and the cell phone set to the camera mode.

4. A cell phone equipped with a camera wherein the cell phone comprises comparingmeans for comparing a signal for identifying whether the caller received together with an incoming call signal matches a pre-registered specific signal, means for answering the incoming call only when the comparing means has detected that the two signals match each other, and a camera whose shutter is automatically operated when a specific signal from the caller is received with the incoming call answered by the answering means.

5. A cell phone equipped with a camera according to claim 3 or 4, wherein the specific signal from the caller may be arbitrarily set through negotiation with the caller.

6. A cell phone equipped with a camera according to any one of claims 1 through 5, wherein the cell phone comprises storage means for storing a picture shot with a camera and display means for arbitrarily calling the picture through operation on operation means.

7. A cell phone equipped with a camera according to any one of claims 1 through 5, wherein the cell phone comprises transmission means for transmitting a picture shot with a camera based on an instruction signal to transmit a picture shot with the camera when the instruction signal is received.

8. A cell phone equipped with a camera according to claim 7, comprising storage means for storing a picture shot with a camera, wherein a picture shot with the camera is read from the storage means and transmitted to the caller based on the instruction signal.

9. A cell phone equipped with a camera according to any one of claims 7 through 8, wherein the cell phone comprises means for transmitting an instruction signal to transmit a picture shot with a camera.
